(19) Europäisches Patentamt
European Patent Office
Office européen des brevets

(11) **EP 1 493 996 B1**

(12) **FASCICULE DE BREVET EUROPEEN**

(45) Date de publication et mention de la délivrance du brevet:
**12.09.2012 Bulletin 2012/37**

(51) Int Cl.:
***G01D 5/249*** *(2006.01)*   ***B62D 15/02*** *(2006.01)*
***G01D 5/04*** *(2006.01)*

(21) Numéro de dépôt: **03291637.1**

(22) Date de dépôt: **02.07.2003**

(54) **Procédé et dispositif de mesure et de calcul de l'angle absolu d'un corps tournant**

Verfahren und Vorrichtung zur Messung und Berechnung des absoluten Drehwinkels eines rotierenden Körpers

Method and apparatus for measuring and calculating the absolute angle of a rotating body

(84) Etats contractants désignés:
**DE FR**

(43) Date de publication de la demande:
**05.01.2005 Bulletin 2005/01**

(73) Titulaire: **Delphi Technologies, Inc.**
**Troy, MI 48007 (US)**

(72) Inventeurs:
• **Lanternier, David**
**67190 Grendelbruch (FR)**
• **Tritschler, Paul-Antoine**
**67400 Illkirch (FR)**

(74) Mandataire: **Robert, Vincent**
**Delphi France SAS**
**Bât. le Raspail - ZAC Paris Nord 2**
**22, avenue des Nations**
**CS 65059 Villepinte**
**95972 Roissy CDG Cedex (FR)**

(56) Documents cités:
**EP-A- 0 877 916     US-A1- 2001 013 774**

**Description**

L'invention concerne un procédé et un dispositif de mesure et de calcul de l'angle absolu d'un corps tournant, y compris sur un nombre de tours qui peut être supérieur à 1. Elle est basée sur la coopération en rotation de trois éléments, le corps primaire dont l'angle de rotation est à mesurer, et deux roues secondaires. De préférence, ces éléments rotatifs comportent une denture périphérique, le corps primaire entraînant par engrènement chaque roue secondaire, les trois étant de dimension, et par conséquent munis d'un nombre de dents, à chaque fois différent.

La position angulaire du corps tournant principal est calculée à partir de la mesure de la position angulaire des roues secondaires. Ce principe est en lui-même connu, et par exemple décrit dans les documents US 2001/0013774 A1 et EP 0877916 A1. Le document EP 0877916 A1 indique un mode de calcul imposant que le nombre de dents de l'une des roues secondaires soit distinct d'une unité de celui de l'autre roue secondaire.

La formule donnant la position angulaire du corps rotatif primaire est en effet notamment obtenue via une équation diophantienne dont la résolution est quasi immédiate dans l'hypothèse précitée. Le même déposant a proposé une autre version d'un dispositif et d'un procédé pour la mesure de la position angulaire absolue d'un corps rotatif, toujours basé sur l'existence de corps secondaires rotatifs dotés de dents ou éventuellement de marques périphériques identiques régulières, et faisant l'objet du document WO 00/34746, dans lequel la condition de résolution n'est plus la même qu'auparavant. Dans ce cas, ladite condition de dents respectivement $n_i$ et $n_j$ des satellites secondaires du corps rotatif primaire est tel que, d'une part, la valeur absolue $|n_i-n_j| >1$, et d'autre part les nombres $(n_i; n_j)$ doivent être premiers entre eux , c'est-à-dire n'avoir comme seul diviseur commun que le nombre 1. Le mode de calcul qui résulte de ces hypothèses peut en fait être considéré comme une généralisation de celui qui fait l'objet du précédent brevet.

Dans les deux cas, le calcul de la position angulaire absolue du corps tournant principal, éventuellement sur plusieurs tours, est réalisé à l'aide de la mesure des positions angulaires absolues des deux corps rotatifs secondaires, c'est-à-dire par exemple des deux roues dentées secondaires.

Le procédé et la méthode selon la présente invention sont basés sur la même structure, mais retiennent des hypothèses de calcul encore différentes, qui présentent l'avantage de permettre l'obtention du résultat final sur la base de l'établissement de la position angulaire absolue d'une seule des roues secondaires.

Ainsi, en premier lieu, le procédé de calcul de l'angle absolu $\alpha_1$ d'un corps tournant primaire est caractérisé en ce que, selon le diamètre et le nombre de dents ou de repères $m_1$ du corps tournant primaire, les diamètres et les nombres de dents ou de repères $m_2$, $m_3$ des roues secondaires sont choisis de telle sorte que, dans le domaine de définition prédéterminé de l'angle $\alpha_1$

* $m_2 < m_3$
* La différence entre le nombre de tours $t_2$ de la première roue secondaire et le nombre de tours $t_3$ de la deuxième roue secondaire soit inférieure ou égale à 1: $t_2 - t_3 \leq 1$, $t_2$ et $t_3$ étant entiers lorsque $t_2 - t_3 = 1$;
* Le calcul de $\alpha_1$ selon l'invention étant alors effectué de la manière suivante:
- selon une première étape, on calcule la valeur :

$$k = (m_3.\delta_3 - m_2.\delta_2) / 360$$

$\delta_2$ et $\delta_3$ étant les positions angulaires modulo 360˚ des roues secondaires ;
- selon une deuxième étape, on calcule la valeur du nombre de tours $t_2$ de la première roue secondaire:

si k > 0 $\quad t_2 = -k / d + m_2 / d + 1$

sinon $\quad t_2 = -k / d$

avec $\quad d = m_3 - m_2$

- selon une troisième étape, on calcule la valeur de $\alpha_1$:

$$\alpha_1 = \alpha_2.m_2/ m_1 = m_2 / m_1.(\delta_2 + 360.t_2)$$

$\alpha_2$ étant la position angulaire absolue de la première roue secondaire.

Selon une philosophie propre à l'invention, les deux roues secondaires ont donc des fonctions différentes. La première, qui comporte le nombre de dents ou de repères le moins élevé, présente un diamètre plus petit que la seconde, et tourne par conséquent plus vite. C'est celle qui offre alors la meilleure précision dans la détection de positionnement angulaire. Il s'agit de la roue dite à mesure "fine".

La seconde roue secondaire de diamètre plus important, comporte plus de dents ou de repères périphériques, et tourne légèrement moins vite. Sa fonction, dans la plage de rotation autorisée, est de donner une indication sur la position respective des roues secondaires et donc, rapportée au domaine de définition de position angulaire du corps primaire, d'indiquer à quel niveau absolu on se situe. Il s'agit de la roue de mesure dite "grossière". La mesure de sa position angulaire modulo 360° est en fait utilisée pour le calcul de la valeur de glissement k, dans le but précité, comme on le verra plus en détail dans la suite.

Dans tous les cas, il n'existe en effet qu'un seul couple de positions angulaires des deux roues secondaires pour chaque point de la plage définie par le domaine de définition de l'angle de rotation du corps tournant primaire.

Les nombres de dents ou de repères périphériques $m_1$, $m_2$ et $m_3$ sont obtenus, en tenant compte de l'espace disponible, à partir de la relation :

$$\alpha_1 = 360 \, m_2.m_3/m_1.(m_3 - m_2)$$

Selon le procédé de l'invention, les angles $\delta_2$ et $\delta_3$ sont codés sur 11 bits et le calcul de k s'effectue alors selon la formule :

$$k = (m_3.\delta_3 - m_2.\delta_2) / 2048.$$

Par ailleurs, en vue de limiter la perte de précision lors de la division par 2048, dans le calcul de k par perte de décimales, le numérateur $(m_3.\delta_3 - m_2.\delta_2)$ peut par exemple être multiplié par 10, la valeur finale obtenue étant ensuite divisée par 10.

L'un des avantages du procédé selon l'invention non encore mentionné est qu'il permet aussi une simplification du circuit électronique du calculateur car, contrairement à d'autres dispositifs de l'art antérieur, les angles $\delta_1$ et $\delta_2$ sont mesurés séquentiellement par ledit calculateur. Alors que dans l'art antérieur précité, les valeurs des positions angulaires des roues secondaires sont utilisées au même niveau hiérarchique dans le calcul de la position du corps tournant primaire, nécessitant une détection synchronisée de leur position modulo 360°, le décalage de mesure correspond bien à la philosophie de la présente invention. La position angulaire de la roue de mesure dite "grossière" peut en effet très bien être détectée de manière décalée par rapport à la détection de la position angulaire de la roue de mesure dite "fine", sans affecter la précision finale du calcul puisque la fonction de leurs mesures respectives est différente.

Dans l'hypothèse où le corps tournant primaire reflète l'angle de braquage d'une colonne de direction de véhicule, une roue dentée ou munie de repères est fixée co-axialement à ladite colonne de direction, et constitue ledit corps primaire. Celui-ci entraîne alors deux roues dentées secondaires dont l'encombrement doit être compatible avec l'espace disponible imposé par l'architecture du haut de colonne.

En pratique, le volant est prévu pour effectuer 4,33 tours, c'est-à-dire plus ou moins 780° par rapport à sa position neutre. Pour que la condition concernant la différence du nombre de tours des deux roues secondaires puisse être respectée, c'est-à-dire que cette différence puisse au plus être égale à 1, selon une possibilité, les domaines de définition des différentes grandeurs sont les suivants:

$\alpha_1 \in$ [0 ; 1570,909°]
$t_1 \in$ [0 ; 4,363]
$t_2 \in$ [0 ; 9]
$t_3 \in$ [0 ; 8]

Il est certes possible que le corps tournant solidarisé à la colonne de direction comporte un nombre différent de dents ou de repères, ainsi que les roues secondaires. Le choix de ces nombres résulte en réalité d'un compromis qui tient compte d'une part du volume limité dû à l'architecture du haut de colonne, et d'autre part de la nécessité de couvrir, dans le domaine de définition théorique du nombre de rotations permises pour le volant, sensiblement un tour de plus pour l'une des roues secondaires que pour l'autre pour respecter la bijectivité existant entre l'ensemble des positions relatives des roues et l'ensemble des positions angulaires du corps primaire,

L'invention concerne également un dispositif de mesure de l'angle absolu d'un corps tournant primaire comportant $m_1$ dents ou repères périphériques, entraînant la rotation de deux roues secondaires dotées respectivement d'un nombre $m_2$ et $m_3$ de dents ou repères, qui sont différents entre eux et de $m_1$, ledit dispositif comprenant des capteurs coopérant avec un aimant fixé à chaque roue pour déterminer sa position angulaire modulo 360˚, un calculateur étant prévu pour calculer l'angle primaire absolu selon le procédé expliqué auparavant.

Plus précisément encore, chaque roue secondaire est associée à deux capteurs à effet Hall décalés de 90˚.

Pour la mise en oeuvre du procédé de l'invention, le calculateur procède, à des intervalles de temps régulièrement espacés, à des mesures séquentielles des valeurs en sortie des capteurs.

En fait, chaque cycle de mesure comporte quatre mesures séquentielles, correspondant au nombre de capteurs associés aux deux roues secondaires.

L'invention va à présent être décrite plus en détail, en référence aux figures annexées, pour lesquelles :

- La figure 1 représente une vue en section très schématique du corps tournant principal et des deux roues secondaires qui lui sont associées, donnant une idée de la structure de base de l'invention; et
- La figure 2 représente un diagramme figurant les courbes des signaux mesurés, sur les deux roues secondaires, par un capteur à effet Hall, et montrant le décalage progressif résultant de la différence de leur vitesse de rotation.

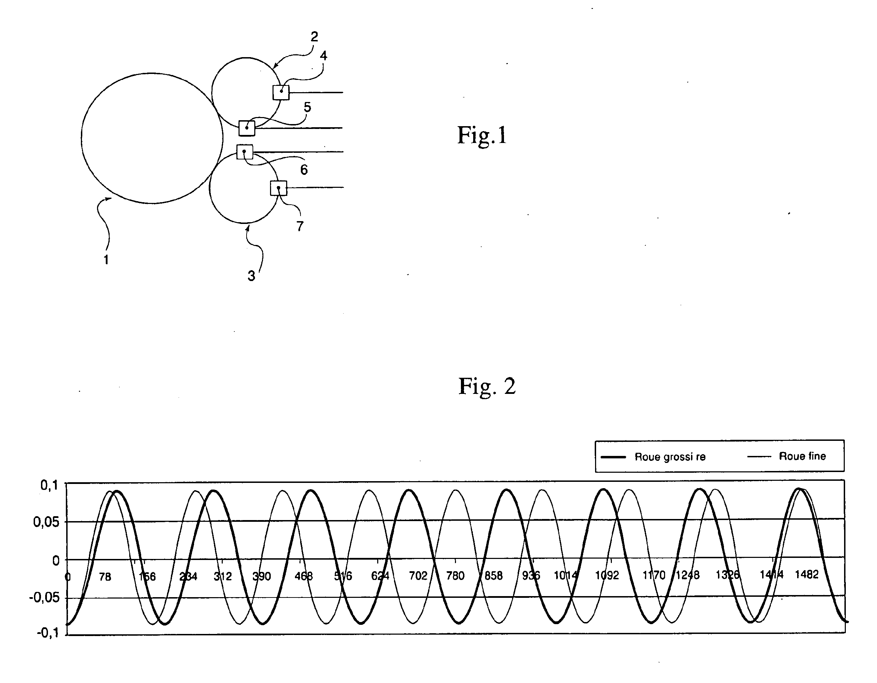

En référence à la figure 1, le corps tournant primaire (1), par exemple solidarisé à une colonne de direction, subit par conséquent la même rotation que celle qui est imprimée au volant.

Cette rotation est répercutée aux deux roues secondaires (2) et (3), la roue dite "fine" et la roue dite "grossière", la première étant d'un diamètre légèrement plus réduit que la seconde. Ces éléments (1, 2, 3) comportent à cet effet des dents qui engrènent de telle sorte que le corps primaire (1) entraîne les roues secondaires (2) et (3) indépendamment l'une de l'autre. Chacune de ces dernières est munie de deux capteurs (4, 5; 6, 7) décalés de 90˚.

Pour chaque roue secondaire (2, 3), l'un des capteurs (4, 5; 6, 7) émet un signal sinusoïdal, alors que l'autre émet un signal cosinusoïdal puisque décalé de 90˚.

La possibilité de générer des signaux sinusoïdaux et cosinusoïdaux permet de vérifier la cohérence des informations issues des deux capteurs, cohérence simplement contrôlée par la formule :

$$\sin_2 + \cos_2 = 1.$$

A titre principal, ces capteurs (4, 5; 6, 7) permettent d'obtenir le positionnement angulaire modulo 360˚ de chacune des roues secondaires, puis de calculer la position de la roue primaire (1) ou corps tournant principal, c'est-à-dire celle du volant, selon le calcul décrit ci-après.

Comme déjà mentionné, le volant peut décrire une rotation de -780˚ à +780˚ par rapport à sa position centrale. Le domaine de rotation du volant, transposé de 780˚, va donc de 0˚ à 1560˚. La mécanique du système constitué de la roue primaire (1) et des deux roues secondaires (2, 3) doit pouvoir décrire tout ce domaine.

Soient :

$\alpha_1, \alpha_2$ et $\alpha_3$ les angles absolus des roues (1), (2) et (3).
$t_1$, $t_2$ et $t_3$ leur nombre de tours parcourus et
$m_1$, $m_2$ et $m_3$ leur nombre de dents.

Comme les roues sont en fait des engrenages en prise directe, nous avons la relation suivante :

$$\alpha_1.m_1 = \alpha_2.m_2 = \alpha_3.m_3 \qquad (a)$$

Comme indiqué, les conditions initiales imposées sont :
$\alpha_1 \leq 1560˚$, avec une valeur la plus proche possible de 1560˚

$$t_2 \leq t_3 + 1 \qquad (b)$$

$t_2$ et $t_3$ étant entiers lorsque $t_2 - t_3 = 1$

Ainsi, quand le domaine de définition est décrit, c'est-à-dire quand l'angle $\alpha1$ est maximal, il faut que la roue (2) ait effectué au maximum un tour de plus que la roue (3). Comme

$t_1 = \alpha_1 / 360$ ; $t_2 = \alpha_2 / 360$ et $t_3 = \alpha_3 / 360$,

La relation (a) devient :

$$t_1.m_1 = t_2.m_2 = t_3.m_3 \qquad (c)$$

(b) et (c) entraînent :

$$t_2.m_2 = (t_2 - 1).m_3$$

$$t_2.m_2 - t_2.m_3 = -m_3$$

$$t_2 = m_3 / (m_3 - m_2) \qquad (c')$$

Or :

$$t_2 = m_1 / m_2.t_1$$

D'où :

$$m_1 / m_2.t_1 = m_3 / (m_3 - m_2)$$

$$t_1 = m_2 / m_1.m_3 / (m_3 - m_2)$$

D'où finalement :

$$\alpha_1 = 360.t_1 = 360.m_2.m_3 / (m_1.(m_3 - m_2)) \quad (d)$$

Le diamètre de l'axe de la colonne de direction entraîne par exemple un choix de $m_1$ = 66 pour la roue primaire (1). On peut alors trouver diverses solutions possibles en fixant $m_2$, puis en trouvant $m_3$ telles que les conditions (b) soient vérifiées.

Une solution particulièrement réaliste, et qui permet d'obtenir des valeurs de $\alpha_1$ et de $t_1$ proches de la borne supérieure de l'intervalle du domaine de définition, consiste à choisir $m_2$ = 32 et $m_3$ = 36.

La valeur d = $m_3$ - $m_2$ = 4 représente alors le nombre de dents d'écart entre les deux roues secondaires (2) et (3). Dans cette hypothèse, on obtient un angle $\alpha_1$ de 1570,909˚ correspondant à $t_1$ = 4,3636 pour des nombres $t_2$ = 9 tours pour la roue secondaire "fine", et $t_3$ = 8 tours pour la roue secondaire "grossière".

Les capteurs à effet Hall permettent de calculer les angles $\delta_2$ et $\delta_3$ des roues (2) et (3) modulo 360˚. Pour connaître la position angulaire absolue de ces roues (2, 3), il faut en principe calculer le nombre de tours $t_2$ et $t_3$ qu'elles ont parcourus, selon les expressions suivantes :

$$\alpha_2 = \delta_2 + 360.t_2$$

et

$$\alpha_3 = \delta_3 + 360.t_3 \qquad (e)$$

Des expressions (a) et (e), on peut déduire :

$$\alpha_1 = m_2 / m_1. \alpha_2$$

et

$$\alpha_1 = m_2 / m_1.(\delta_2 + 360.t_2) \qquad (f)$$

A ce stade, il faut calculer $t_2$. L'expression (a) peut s'écrire:

$$\alpha_2.m_2 / m_1 = \alpha_3.m_3 / m_1$$

En appliquant (e), cette expression devient :

$$(\delta_2 + 360.t_2).m_2 / m_1 = (\delta_3 + 360.t_3).m_3 / m_1$$

Ce qui peut encore s'exprimer de la façon suivante :

$$(m_3.\delta_3 - m_2.\delta_2) / 360 = t_2.m_2 - t_3.m_3 = k \qquad (g)$$

k peut être facilement calculé à l'aide de $\delta_2$ et $\delta_3$. $t_2$ peut ensuite être obtenu, toujours à partir de la relation (g), en considérant l'hypothèse aux limites $t_2 = t_3 + 1$, et la relation d = $m_3$ - $m_2$.

La relation (g) s'exprime alors:

$$k = t_2.m_2 - (t_2 - 1).(m_2 + d) = -t_2.d + m_2 + d.$$

Il s'ensuit :

$$t_2 = (-k + m_2) / d + 1 \qquad (h)$$

Or, nous avons vu que $t_2$ est maximal quand:

$$t_2 = m_3 / (m_3 - m_2) \qquad (c').$$

Avec l'expression d = $m_3$ - $m_2$, on obtient $t_2 = m_2 / d + 1$. Le domaine de définition est donc l'intervalle entre $[0 ; m_2 / d + 1]$. Si l'on développe la relation (h), elle s'écrit

$$t_2 = -k / d + m_2 / d + 1.$$

La valeur maximale de $t_2$ est contenue dans cette expression. Pour garantir que $t_2 \in [0 ; m_2 / d + 1]$, on utilise en pratique la relation conditionnelle

Si k > 0, alors

$$t_2 = -k / d + m_2 / d + 1$$

Sinon

$$t_2 = -k / d \qquad\qquad (i)$$

En revenant à la relation (f), on obtient :

$$\alpha_1 = m_2 / m_1.(\delta_2 + 360.t_2)$$

On peut alors calculer la valeur de l'angle $\alpha_1$, puisque tous les paramètres de cette dernière relation sont à présent connus.

En référence à la figure 2, qui illustre les courbes sinusoïdales issues d'un capteur associé à chacune des roues secondaires (2, 3), le glissement progressif de l'une par rapport à l'autre sur la totalité du domaine de définition (0; 1570,909˚) apparaît particulièrement nettement. Lorsque la borne supérieure du domaine de définition est atteinte, la roue "fine" (2) a effectué une rotation de plus que la roue "grossière" (3). Sur cette plage, il existe un couple et un seul de positions relatives des deux roues (2, 3) qui correspond à une valeur de position angulaire absolue $\alpha_1$.

Comme on l'a mentionné précédemment, c'est la détection de la position angulaire de la roue "fine" (2) qui permet in fine le calcul de la position angulaire $\alpha_1$ de la roue primaire (1). La détection de la position angulaire de la roue "grossière" (3) permet de se situer dans le domaine de définition de la roue primaire, et par conséquent de conférer une valeur absolue au calcul de la position angulaire de cette dernière.

**Revendications**

1. Procédé de calcul de l'angle absolu $\alpha_1$ d'un corps tournant primaire (1), y compris sur un nombre de tour $t_1$ qui peut être supérieur à 1, ledit corps comportant $m_1$ dents ou repères périphériques et entraînant en rotation deux roues (2, 3) secondaires munies d'un nombre de dents ou de repères périphériques $m_2$, $m_3$ différents entre eux et de $m_1$, des capteurs étant associés aux roues secondaires (2, 3) et fournissant des informations sur la position angulaire ($\delta^2$, $\delta^3$) modulo 360˚ desdites roues (2, 3), tel que, selon le diamètre et le nombre de dents ou de repères $m_1$ du corps tournant (1), les diamètres et les nombres de dents ou de repères $m_2$, $m_3$ des roues secondaires (2, 3) sont choisis de telle sorte que, dans le domaine de définition prédéterminé de l'angle $\alpha_1$:

   *$m_2 < m_3$
   * La différence entre le nombre de tours $t_2$ de la première roue secondaire (2) et le nombre de tours $t_3$ de la deuxième roue secondaire (3) soit inférieure ou égale à 1: $t_2 - t_3 \leq 1$, $t_2$ et $t_3$ étant entiers lorsque $t_2 - t3 = 1$;
   * **caractérisé en ce que** le calcul de $\alpha_1$ est alors effectué de la manière suivante:

   - selon une première étape, on calcule la valeur :

   $$k = (m_3.\delta_3 - m_2.\delta_2) / 360$$

   - selon une deuxième étape, on calcule la valeur du nombre de tours $t_2$ de la première roue secondaire (2) :

   si $k>0$ $t_2 = -k/d + m_2/d + 1$ sinon $t_2 = -k / d$
   avec $d = m_3 - m_2$

   - selon une troisième étape, on calcule la valeur de $\alpha_1$:

   $\alpha_1 = \alpha_2.m_2 / m_1 = m_2 / m_1.(\delta_2 + 360.t_2)$
   $\alpha_2$ étant la position angulaire absolue de la première roue secondaire (2)

2. Procédé de calcul de l'angle absolu $\alpha_1$ d'un corps tournant selon la revendication précédente, **caractérisé en ce que** les nombres de dents ou de repères périphériques $m_1$, $m_2$ et $m_3$ sont obtenus, en tenant compte de l'espace disponible, à partir de la relation :

$$\alpha_1 = 360 \, m_2.m_3 / m_1.(m_3 - m_2)$$

**3.** Procédé de calcul de l'angle absolu $\alpha_1$ d'un corps tournant selon l'une des revendications précédentes, **caractérisé en ce que** les angles $\delta_2$ et $\delta_3$ sont codés sur 11 bits, et le calcul de k s'effectue alors selon la formule :

$$k = (m_3.\delta_3 - m_2.\delta_2) / 2048$$

**4.** Procédé de calcul de l'angle absolu $\alpha_1$ d'un corps tournant selon la revendication précédente, **caractérisé en ce que**, en vue de limiter la perte de précision lors de la division par 2048 dans le calcul de k, par perte de décimales, le numérateur $(m_3.\delta_3 - m_2.\delta_2)$ est multiplié par 10 avant la division par 2048, la valeur finale obtenue étant à nouveau divisée par 10.

**5.** Procédé de calcul de l'angle absolu $\alpha_1$ d'un corps tournant selon l'une quelconque des revendications précédentes, **caractérisé en ce que** les angles $\delta_1$ et $\delta_2$ sont mesurés séquentiellement par un calculateur.

**6.** Procédé de calcul de l'angle absolu $\alpha_1$ d'un corps tournant selon l'une quelconque des revendications précédentes, **caractérisé en ce que** les domaines de définition des différentes grandeurs sont les suivants :

$\alpha_1 \in [0 ; 1570,909°]$
$t_1 \in [0 ; 4,363]$
$t_2 \in [0 ; 9]$
$t_3 \in [0 ; 8]$

pour un corps tournant primaire (1) comportant 66 dents ou repères, et des roues secondaires (2, 3) dotées respectivement de 32 et 36 dents ou repères périphériques.

**7.** Procédé de calcul de l'angle absolu $\alpha_1$ d'un corps tournant selon l'une quelconque des revendications précédentes, **caractérisé en ce que** le corps tournant primaire (1) reflète l'angle de braquage d'une colonne de direction de véhicule.

**8.** Dispositif de mesure de l'angle absolu $\alpha_1$ d'un corps tournant primaire (1) comportant $m_1$ dents ou repères périphériques et entraînant en rotation deux roues secondaires (2, 3) dotées respectivement d'un nombre $m_2$ et $m_3$ de dents ou repères différents entre eux et de $m_1$, **caractérisé en ce qu'**il comporte, associé à chaque roue secondaire (2, 3), des capteurs (4, 5, 6, 7) coopérant avec un aimant fixé à la roue (2, 3) pour déterminer leur position angulaire modulo 360°, un calculateur étant prévu pour calculer l'angle absolu $\alpha$1 selon le procédé des revendications 1 à 7.

**9.** Dispositif de mesure de l'angle absolu $\alpha_1$ d'un corps tournant primaire selon la revendication précédente, **caractérisé en ce que** chaque roue secondaire (2, 3) est associée à deux capteurs à effet Hall (4, 5; 6,7) décalés de 90°.

**10.** Dispositif de mesure de l'angle absolu $\alpha_1$ d'un corps tournant primaire (1) selon l'une des revendications 8 et 9, **caractérisé en ce que** le calculateur procède, à des intervalles de temps régulièrement espacés, à des mesures séquentielles des valeurs en sortie des capteurs (4, 5, 6, 7).

**Claims**

**1.** Process for calculating the absolute angle $\alpha_1$ of a primary rotating body (1), including a number of turns $t_1$ which may be greater than 1, the said body including $m_1$ peripheral teeth or reference marks and driving in rotation two secondary wheels (2, 3) provided with a number of peripheral teeth or reference marks $m_2$, $m_3$ different from each other and from $m_1$, sensors being associated with the secondary wheels (2, 3) and providing data regarding the angular position $(\delta_2, \delta_3)$ modulo 360° of the said wheels (2, 3), such that, depending on the diameter and the number of teeth or of reference marks $m_1$ of the rotating body (1), the diameters and the numbers of teeth or of reference marks $m_2$, $m_3$ of the secondary wheels (2, 3) are so selected that, within the predetermined data domain of the angle $\alpha_1$:

* $m_2 < m_3$
* The difference between the number of turns $t_2$ of the first secondary wheel (2) and the number of turns $t_3$ of the second secondary wheel (3) is less than or equal to 1: $t_2 - t_3 \leq 1$, $t_2$ and $t_3$ being whole when $t_2 - t_3 = 1$;

* **characterised by** the fact that calculation of $\alpha_1$ is then performed in the following manner:

- in a first step is calculated the value $k=(m_3.\delta_3-m_2.\delta_2)/360$
- in a second step is calculated the value of the number of turns $t_2$ of the first secondary wheel (2):

if $k>0$      $t_2 = -k/d+m_2/d+1$
otherwise      $t_2 = -k/d$
with      $d = m_3-m_2$

- in a third step is calculated the value of $\alpha_1$:

$\alpha_1 = \alpha_2.m_2/m_1 = m_2/m_1. (\delta_2+360.t_2)$
$\alpha_2$ being the absolute angular position of the first secondary wheel (2)

2. Process for calculating the absolute angle $\alpha_1$ of a rotating body as described in the preceding claim, **characterised by** the fact that the numbers of peripheral teeth or reference marks $m_1$, $m_2$ and $m_3$ are obtained, taking into account the available space, from the relationship:

$$\alpha_1 = 360 \; m_2.m_3/m_1. (m_3-m_2)$$

3. Process for calculating the absolute angle $\alpha_1$ of a rotating body as described in one of the preceding claims, **characterised by** the fact that the angles $\delta_2$ and $\delta_3$ are coded over 11 bits, and the calculation of k is then performed in accordance with the formula:

$$k = (m_3.\delta_3-m_2.\delta_2)/2048$$

4. Process for calculating the absolute angle $\alpha_1$ of a rotating body as described in the preceding claim, **characterised by** the fact that, in order to limit the loss of accuracy on division by 2048 in the calculation of k, by loss of decimals, the numerator $(m_3.\delta_3-m_2.\delta_2)$ is multiplied by 10 before the division by 2048, the final value obtained being again divided by 10.

5. Process for calculating the absolute angle $\alpha_1$ of a rotating body as described in any one of the preceding claims, **characterised by** the fact that the angles $\delta_1$ and $\delta_2$ are measured sequentially by a computer.

6. Process for calculating the absolute angle $\delta_1$ of a rotating body as described in any one of the preceding claims, **characterised by** the fact that the data domains of the different magnitudes are as follows:

$\alpha_1 \in [0 ; 1570.909°]$
$t_1 \in [0 ; 4.363]$
$t_2 \in [0 ; 9]$
$t_3 \in [0 ; 8]$

for a primary rotating body (1) including 66 teeth or reference marks, and secondary wheels (2, 3) respectively having 32 and 36 peripheral teeth or reference marks.

7. Process for calculating the absolute angle $\alpha_1$ of a rotating body as described in any one of the preceding claims, **characterised by** the fact that the primary rotating body (1) reflects the angle of lock of a vehicle steering column.

8. Device for measuring the absolute angle $\alpha_1$ of a primary rotating body (1) including $m_1$ peripheral teeth or reference marks and driving in rotation two secondary wheels (2, 3) respectively having a number $m_2$ and $m_3$ of teeth or

reference marks different from each other and from $m_1$, **characterised by** the fact that it includes, associated with each secondary wheel (2, 3), sensors (4, 5, 6, 7) co-operating with a magnet fixed to the wheel (2, 3) to determine their angular positions modulo 360˚, a computer being provided to calculate the absolute angle $\alpha 1$ in accordance with the process of claims 1 to 7.

**9.** Device for measuring the absolute angle $\alpha_1$ of a primary rotating body as described in the preceding claim, **characterised by** the fact that each secondary wheel (2, 3) is associated with two Hall effect sensors (4, 5; 6,7) offset by 90˚.

**10.** Device for measuring the absolute angle $\alpha_1$ of a primary rotating body (1) as described in one of claims 8 and 9, **characterised by** the fact that the computer performs, at uniformly spaced time intervals, sequential measurements of the values at the outputs of the sensors (4, 5, 6, 7).

**Patentansprüche**

**1.** Verfahren zum Berechnen des absoluten Drehwinkels $\alpha_1$ eines drehbaren Primärkörpers (1) einschließlich einer Anzahl von Umdrehungen $t_1$, die größer als 1 sein kann, wobei der Körper $m_1$ Zähne bzw. Umfangsmarkierungen aufweist und zwei Sekundärräder (2, 3) drehend antreibt, die mit einer Anzahl von Zähnen bzw. Umfangsmarkierungen $m_2$, $m_3$ versehen sind, die sich voneinander und von $m_1$ unterscheiden, wobei den Sekundärrädern (2, 3) Sensoren zugeordnet sind, die Informationen über die Winkelposition ($\delta_2$, $\delta_3$) Modulo 360˚ der Räder (2, 3) liefern, derart, dass je nach Durchmesser und Anzahl an Zähnen bzw. Markierungen $m_1$ des drehbaren Körpers (1) die Durchmesser und Anzahlen an Zähnen bzw. Markierungen $m_2$, $m_3$ der Sekundärräder (2, 3) so gewählt werden, dass im vorbestimmten Definitionsbereich des Winkels $\alpha_1$ gilt:

* $m_2 < m_3$
* die Differenz zwischen der Anzahl an Umdrehungen t2 des ersten Sekundärrads (2) und der Anzahl an Umdrehungen t3 des zweiten Sekundärrads (3) kleiner oder gleich 1: t2 - t3 $\leq$ 1 ist, wobei t2 und t3 ganzzahlig sind, wenn t2 - t3 = 1;
* **dadurch gekennzeichnet, dass** die Berechnung von □1 dann auf nachfolgende Art und Weise erfolgt:

- in einem ersten Schritt wird folgender Wert berechnet:

$$k = (m_3.\delta_3 - m_2.\delta_2) / 360$$

- in einem zweiten Schritt wird der Wert der Anzahl an Umdrehungen t2 des ersten Sekundärrads (2) berechnet:

wenn k > 0 $t_2$=-k/d+$m_2$/d+1
ansonsten $t_2$ = -k / d
mit d=$m_3$-$m_2$

- in einem dritten Schritt wird der Wert von □1 berechnet:

$\alpha_1 = \alpha_2.m_2 / M_1 = m_2 / M_1.(\delta_2 + 360.t_2)$
wobei $\alpha_2$ die absolute Winkelposition des ersten Sekundärrads (2) ist.

**2.** Verfahren zum Berechnen des absoluten Drehwinkels $\alpha_1$ eines drehbaren Körpers nach dem vorangehenden Anspruch, **dadurch gekennzeichnet, dass** die Anzahlen an Zähnen bzw. Umfangsmarkierungen $m_1$, $m_2$ und $m_3$ unter Berücksichtigung des verfügbaren Raums ausgehend von dem nachfolgenden Verhältnis erhalten werden:

$$\alpha_1 = 360 \, m_2.m_3 / m_1.(m_3 - m_2)$$

3. Verfahren zum Berechnen des absoluten Drehwinkels $\alpha_1$ eines drehbaren Körpers nach einem der vorangehenden Ansprüche, **dadurch gekennzeichnet, dass** die Drehwinkel $\delta_2$ und $\delta_3$ auf 11 Bit kodiert sind und die Berechnung von k dann nach folgender Formel erfolgt:

$$k = (m_3.\delta_3 - m_2.\delta_2) / 2048$$

4. Verfahren zum Berechnen des absoluten Drehwinkels $\alpha_1$ eines drehbaren Körpers nach dem vorangehenden Anspruch, **dadurch gekennzeichnet, dass** zum Begrenzen des Genauigkeitsverlustes bei der Division durch 2048 bei der Berechnung von k aufgrund des Verlustes von Dezimalstellen der Zähler ($m_3.\delta_3$ - $m_2.\delta_2$) vor der Division durch 2048 mit 10 multipliziert wird, wobei der erhaltene Endwert erneut durch 10 dividiert wird.

5. Verfahren zum Berechnen des absoluten Drehwinkels $\alpha_1$ eines drehbaren Körpers nach einem der vorangehenden Ansprüche, **dadurch gekennzeichnet, dass** die Drehwinkel $\delta_1$ und $\delta_2$ von einem Rechner sequentiell gemessen werden.

6. Verfahren zum Berechnen des absoluten Drehwinkels $\alpha_1$ eines drehbaren Körpers nach einem der vorangehenden Ansprüche, **dadurch gekennzeichnet, dass** die Definitionsbereiche der verschiedenen Größen wie folgt lauten:

$\alpha_1 \in$ [0; 1570,909˚]
$t_1 \in$ [0; 4,363]
$t_2 \in$ [0; 9]
$t_3 \in$ [0; 8]

und zwar für einen drehbaren Primärkörper (1) mit 66 Zähnen bzw. Markierungen und Sekundärrädern (2, 3), die mit 32 bzw. 36 Zähnen bzw. Umfangsmarkierungen versehen sind.

7. Verfahren zum Berechnen des absoluten Drehwinkels $\alpha_1$ eines drehbaren Körpers nach einem der vorangehenden Ansprüche, **dadurch gekennzeichnet, dass** der drehbare Primärkörper (1) den Einschlagwinkel der Lenksäule eines Fahrzeugs widergibt.

8. Vorrichtung zum Messen des absoluten Drehwinkels $\alpha_1$ eines drehbaren Primärkörpers (1), der $m_1$ Zähne bzw. Umfangsmarkierungen aufweist und zwei Sekundärräder (2, 3) drehend antreibt, die mit einer Anzahl $m_2$ bzw. $m_3$ von Zähnen bzw. Umfangsmarkierungen versehen sind, die sich voneinander und von $m_1$ unterscheiden, **dadurch gekennzeichnet, dass** sie in Zuordnung zu jedem Sekundärrad (2, 3) Sensoren (4, 5, 6, 7) aufweist, die mit einem am Rad (2, 3) befestigen Magnet zusammenwirken, um deren Winkelposition Modulo 360˚ zu ermitteln, wobei ein Rechner vorgesehen ist, um den absoluten Drehwinkel $\alpha_1$ nach dem Verfahren gemäß Anspruch 1 bis 7 zu berechnen.

9. Vorrichtung zum Messen des absoluten Drehwinkels $\alpha_1$ eines drehbaren Primärkörpers nach dem vorangehenden Anspruch, **dadurch gekennzeichnet, dass** jedem Sekundärrad (2, 3) zwei Hall-Effekt-Sensoren (4, 5; 6, 7) zugeordnet sind, die um 90˚ versetzt sind.

10. Vorrichtung zum Messen des absoluten Drehwinkels $\alpha_1$ eines drehbaren Primärkörpers (1) nach einem der Ansprüche 8 und 9, **dadurch gekennzeichnet, dass** der Rechner in gleichmäßig beabstandeten Zeitintervallen sequentielle Messungen der Werte am Ausgang der Sensoren (4, 5, 6, 7) durchführt.

Fig.1

Fig. 2

Roue grossi re — Roue fine

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20010013774 A1
- EP 0877916 A1
- WO 0034746 A